Europäisches Patentamt

European Patent Office

Office européen des brevets

(11) Publication number: **0 411 755 A1**

# EUROPEAN PATENT APPLICATION

(21) Application number: **90306454.1**

(22) Date of filing: **13.06.90**

(51) Int. Cl.⁵: **F02M 55/00, B01D 19/00**

(30) Priority: **03.08.89 GB 8917782**

(43) Date of publication of application:
**06.02.91 Bulletin 91/06**

(84) Designated Contracting States:
**DE FR GB IT**

(71) Applicant: **ROLLS-ROYCE plc**
**65 Buckingham Gate**
**London, SW1E 6AT(GB)**

(72) Inventor: **Loxley, Russell Allan**
**25 Willow Green**
**Coalville, Leicestershire(GB)**

(74) Representative: **Gunn, Michael Alan**
**Company Patents and Licensing Dept.,**
**Rolls-Royce plc, P.O. Box 31, Moor Lane**
**Derby DE2 8BJ(GB)**

(54) **Hydraulically operated electromagnetic fluid valve.**

(57) A fluid valve 10 is described for use in hydraulic systems where it is necessary to vent a low density fluid from a high density fluid.

The fluid valve 10 comprises a valve seat 21, an armature 20, resilient means 24 operative to urge the armature against the valve seat 21 and an electromagnet. In operation the electromagnet is energised and exerts a force on the armature 20 to move the armature 20 against the action of the resilient means 24. The armature 20 moves in such a direction that it is displaced from the valve seat 21 to open the fluid valve 10.

The force of the electromagnet 22 on the armature 20 is such that a low density fluid is permitted to pass through the fluid valve 10. However the fluid force of a high density fluid is sufficient to overcome the force of the electromagnet 22. The resilient means 24 and fluid force combining to urge the armature 20 against the valve seat 21 to close the fluid valve 10.

*Fig. 1.*

# A FLUID VALVE

The present invention relates to a fluid valve and in particular to a hydraulically operated electromagnetic fluid valve. The hydraulically operated electromagnetic valve whilst allowing the passage of low density fluids will not allow the passage of high density fluids.

It is known to use conventional electromagnetic valves in hydraulic systems in which it is necessary to vent low density fluids. Such systems utilise remote detection devices which selectively energise a solenoid to open and close the electromagnetic valve to control the passage of fluid through the valve. One such device is described in Soviet Union patent number 568785. SU568785 describes an electromagnetic valve for venting a low density fluid, such as air, from a hydraulic system. The system comprises a control chamber, an electromagnetic valve and a level sensor connected to an a.c. bridge and relay. The level sensor is a capacitor which is located in the control chamber. As the fluid level falls in the chamber due to an increase in the air volume, the capacitance of the capacitor decreases resulting in an imbalance in the a.c. bridge causing the relay to close the contacts which energise the solenoid. Energising of the solenoid causes an armature in the valve to move upwards to open the valve and vent the air out of the control chamber. On the fluid level rising in the chamber the capacitance is restored and the contacts open, switching off the power to the solenoid. Resilient means such as a compression spring moves the armature downwards to close the valve.

The present invention seeks to provide a hydraulically operated electromagnetic fluid valve which eliminates the need for a remote sensor to selectively energise the solenoid.

According to the present invention a fluid valve comprises a valve seat, an armature, resilient means operative to urge the armature against the valve seat and a means for exerting a force on the armature to lift it off said valve seat,whereby in operation the means for exerting a force on the armature is activated to exert a force on the armature to move the armature against the action of the resilient means in such a direction that the armature is displaced from the valve seat to open the valve, the force exerted on the armature being such that a low density fluid is permitted to pass through the open valve whereas a high density fluid has sufficient fluid dynamic energy to generate a fluid force capable of overcoming the force exerted on the armature so that the resilient means and fluid force combine to urge the armature against the valve seat to close the valve.

In one embodiment the armature preferably extends on the upstream side of the valve seat with respect to the flow of fluid through the valve. The means for exerting a force on the armature is disposed on the upstream side of the valve seat adjacent to the armature.

In a further embodiment of the present invention the armature preferably extends on the downstream side of the valve seat with respect to the fluid flow through the valve. The means for exerting a force on the armature is disposed on the downstream side of the valve seat adjacent the armature.

The means for exerting a force on the armature may be an electromagnet.

Preferably the resilient means is a compression spring.

The present invention will now be described by way of example and with reference to the accompanying drawings in which:-

Figure 1, shows one embodiment of an electromagnetic valve in accordance with the present invention,

Figure 2, shows a second embodiment of an electromagnetic valve in accordance with the present invention.

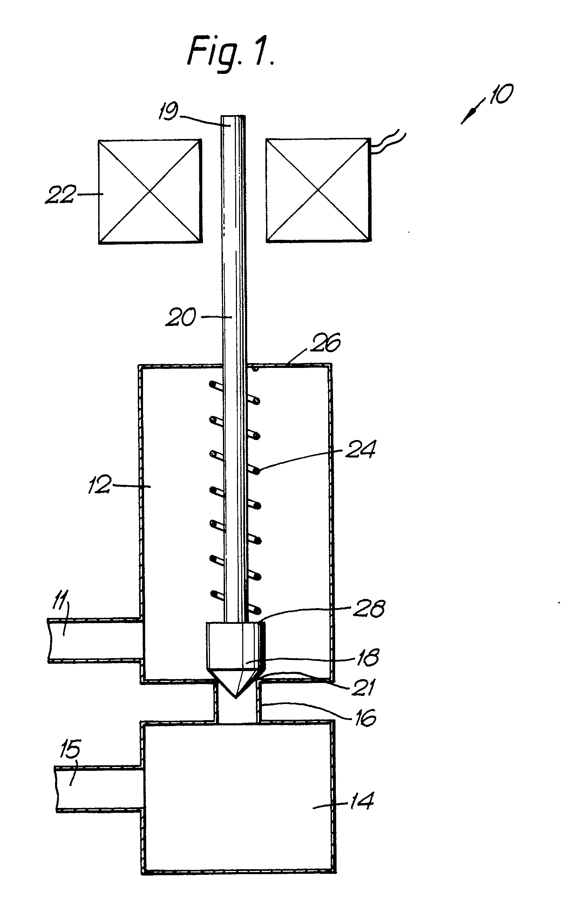

With reference to figure 1, an electromagnetic valve generally indicated at 10 comprises an inlet chamber 12 interconnected by a fluid passage to an outlet chamber 14. The inlet 12 and outlet 14 chambers are interconnected by a fluid passage 16 which is selectively opened and closed by an armature 20.

The armature 20 has an inner end 18 and an outer end 19. The armature extends through the inlet chamber 12 and seals at its inner end 18 against a valve seat 21. The valve seat 21 is located on the upstream side of the fluid passage 16 with respect to the operational flow of fluid through the fluid passage 16.

Movement of the armature 20 is controlled by a resilient means 24 and a solenoid 22 which cooperates with the inner end 18 of the armature 20 and is situated adjacent the inlet chamber 12. Resilient means 24, shown as a compression spring is interposed about the armature between surface 26 of the inlet chamber 12 and surface 28 of the inner end 18 of armature 20.

The electromagnetic valve operates to open and close the fluid passage 16 by movement of the armature 20, so selectively allowing fluid to flow from the inlet 11 to the outlet 15 through the inlet chamber 12 and the outlet chamber 14 respectively. The armature 20 is solenoid powered to open the fluid passage 16 and spring loaded to shut the fluid passage 16. Operation of the electromagnetic valve is dependant upon the density of the fluid whose flow it is controlling.

In operation power is continuously supplied to the solenoid 22 in order to energise it. By energising the solenoid 22 a magnetic field is generated within the solenoid 22 which attracts the armature 20 to a position within the solenoid 22 against the force of the resilient means 24. Attraction of the armature 20 to within the solenoid 22 removes the inner end 18 of the armature 20 from the fluid passage 16 to allow the passage of fluid therethrough.

If a low density fluid, such as air is present at the inlet 11 of the electromagnetic valve 10, then the pressure difference across the electromagnetic valve is negligible. The low density fluid at the inlet 11 has insufficient fluid dynamic energy to produce a force capable of overcoming the attractive force of the solenoid 22 on the armature 20. The fluid passage 16 stays open, fluid flowing from the inlet chamber 12 to the outlet chamber 14. The low density fluid then exits through the outlet 15 which is connected to a tank into which the fluid drains.

If a high density fluid is present at the inlet 11 of the electromagnetic valve 10 then the pressure difference across the electromagnetic valve from the inlet 11 to the outlet 15 increases. The high density fluid at the inlet 11 has sufficient fluid dynamic energy to generate a fluid force capable of overcoming the attractive force of the solenoid 22 acting on the armature 20. The armature 20 then moves under the influence of the compression spring 24 and the fluid force to a position in which the inner end 18 of the armature 20 obstructs the fluid passage 16. The high density fluid is therefore prevented from passing through the fluid passage 16 to the outlet 15.

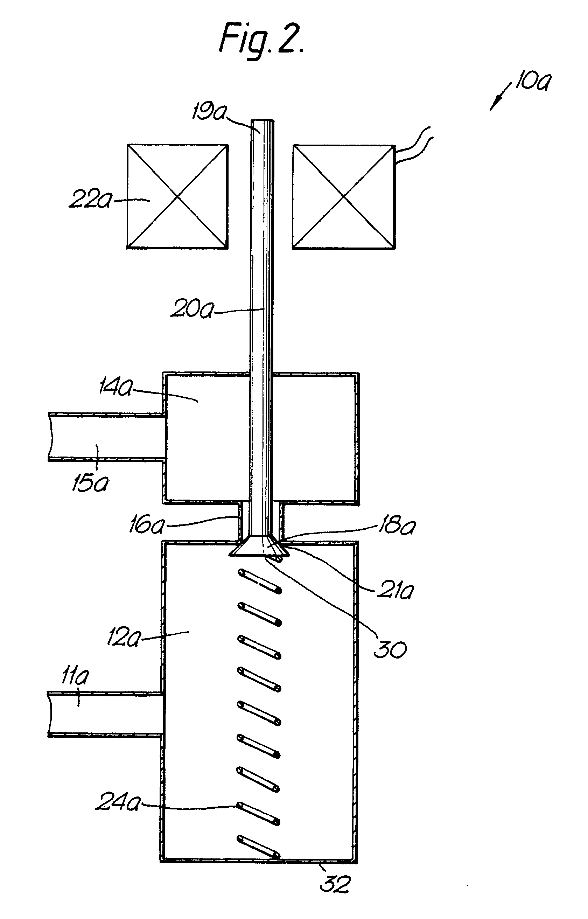

Figure 2 shows an alternative arrangement of an electromagnetic valve 10a. The reference numerals used in figure 2 are the same as in figure 1 for integers common to both. The differences between the arrangements being that in figure 2 the armature 20a extends through the fluid passage 16a and the outlet chamber 14a. The inner end 18a of the armature 20a seals on valve seat 21a located on the upstream side of the fluid passage 16a with respect to the operational flow of fluid through the fluid passage. The armature 20a extends through the outlet chamber 14a so that its outer end 19a cooperates with a solenoid 22a adjacent the outlet chamber 14a. Movement of the armature 20a is controlled by the solenoid 22a and by the resilient means 24a, shown as a compression spring. The compression spring 24a is interposed between surface 30 of inner end 18a of the armature 20a and surface 32 of the inlet chamber 21a.

Energising of the solenoid 22a, in this embodiment causes the armature 20a to be repelled away from the solenoid 22a. The armature 20a is repelled only when the repulsive force of the solenoid 22a is sufficient to overcome the resistance of the compression spring 24a and the fluid force at the inlet 11a.

If a low density fluid is present at the inlet 11a then the repulsive force of the solenoid 22a is sufficient to overcome the resistance of the fluid and the compression spring 24a. The armature 20a is repelled from the solenoid 22a lifting the inner end 18a of the armature off the valve seat 21a. This movement of the armature 20a opens the fluid passage 16a allowing the low density fluid to flow through the electromagnetic valve 10a.

However if a high density fluid is present at the inlet 11a of the electromagnetic valve 10a, then the force of this fluid acts on the inner end 18a of the armature 20a to counteract the repulsive force of the solenoid 22a. The compression spring 24a and the force of the fluid combine to move the armature 20a so that the inner end 18a obstructs the fluid passage 16a, preventing passage of the high density fluid through the electromagnetic valve 10a.

For both the embodiments described, in the event that high density fluid is present at the inlets 11 or 11a prior to energising the solenoid 22 or 22a, then on energising the solenoid 22 or 22a the force of the solenoid is counteracted by the force of the high density fluid, the resilient means 24 or 24a ensuring that the electromagnetic valve 10 or 10a remains closed.

In both the embodiments described the electromagnetic valves 10 and 10a, are operated hydraulically by the density of the fluid flow that it is controlling.

Although the present invention has been described with reference to an electromagnetic valve it will be appreciated to one skilled in the art that means other than an electromagnet may be used to exert a force on the armature. The means for exerting a force on the armature may for example be a further spring or be pneumatic.

Applications of fluid valves in accordance with the present invention are in hydraulic systems were it is necessary to vent low density fluid, such as air, from a high density fluid. A particular application of these devices is in the starting or repriming of fuel pumps.

## Claims

1. A fluid valve comprising a valve seat, an armature and a resilient means operative to urge the armature against the valve seat characterised in that there is provided a means for exerting a force on the armature to lift it off said valve seat, whereby in operation the means for exerting a force on the armature is activated to exert a force on the armature to move the armature against the action of the resilient means in such a direction that the armature is displaced from the valve seat to open the valve, the force exerted on the armature being such that a low density fluid is permitted to pass through the open valve, whereas a high density fluid has sufficient fluid dynamic energy to generate a fluid force capable of overcoming the force exerted on the armature so that the resilient means and fluid force combine to urge the armature against the valve seat to close the valve.

2. A fluid valve as claimed in claim 1 characterised in that the armature extends to the upstream side of the valve seat with respect to the flow of fluid therethrough.

3. A fluid valve as claimed in claim 2 characterised in that the means for exerting a force on the armature is disposed on the upstream side of the valve seat adjacent the armature.

4. A fluid valve as claimed in claim 1 characterised in that the armature extends to the downstream side of the valve seat with respect to the flow of fluid therethrough.

5. A fluid valve as claimed in claim 4 characterised in that the means for exerting a force on the armature is disposed on the downstream side of the valve seat adjacent the armature.

6. A fluid valve as claimed in any preceding claim characterised in that the means for exerting a force on the armature is an electromagnet.

7. A fluid valve as claimed in any preceding claim characterised in that the resilient means is a compression spring.

# Fig. 1.

# Fig.2.

European Patent Office

# EUROPEAN SEARCH REPORT

Application Number

**EP 90 30 6454**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 732 131 (HENSEL)<br>* column 2, lines 10 - 31; figures *<br>– – – | 1,7 | F 02 M 55/00<br>B 01 D 19/00 |
| A | US-A-2 795 269 (WITTE)<br>* column 4, lines 14 - 69; figures 3, 4 *<br>– – – | 1 | |
| A | DE-A-3 131 206 (NISSAN MOTOR CO.)<br>* page 19, line 32 - page 20, line 23; figure 11 *<br>– – – | 1 | |
| A | US-A-2 348 357 (PARKS)<br>– – – | | |
| A | US-A-1 113 621 (GOUGH)<br>– – – – – | | |
| | | | TECHNICAL FIELDS SEARCHED (Int. Cl.5) |
| | | | B 01 D<br>F 02 M<br>F 16 K |

The present search report has been drawn up for all claims

| Place of search | Date of completion of search | Examiner |
|---|---|---|
| The Hague | 30 October 90 | CHRISTENSEN J.T. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document